# FASCICULE DE BREVET EUROPEEN

(11) **EP 2 835 184 B1**
(45) Date de publication et mention de la délivrance du brevet: **12.10.2016**
(21) Numéro de dépôt: 14179853.8
(22) Date de dépôt: 05.08.2014
(51) Int. Cl.: B07B 13/00, B29B 17/02

(54) **Dispositif de séparation de films a partir d'une masse de déchets et installation de tri le comprenant**
Vorrichtung zur Trennung von Folien aus einer Masse von Abfällen, und diese Vorrichtung umfassende Sortieranlage
Device for separating films from a mass of waste and sorting facility comprising same

(30) Priorité: 05.08.2013 FR 1357792
(43) Date de publication de la demande: 11.02.2015
(73) Titulaire: Neos, 21200 Beaune (FR)
(72) Inventeur: Chapuis, Mathieu, 21410 SAINTE MARIE SUR OUCHE (FR); Piponniau, Nicolas, 71530 SASSENAY (FR); Parisse, Rémi, 21212 HAUTEVILLE LES DIJON (FR); Bernad, Christophe, 21190 NANTOUX (FR)
(74) Mandataire: Chaillot, Geneviève

(56) Documents cités:
- EP-A1- 1 970 130
- US-A- 6 003 680

## Description

La présente invention concerne le domaine du tri des déchets, notamment issus de la collecte sélective, et concerne en particulier la séparation de films à partir d'un flux de masse de déchets en mélange mise en mouvement dans une direction, par exemple par un convoyeur d'alimentation, dans un centre de tri de déchets.

Dans la présente, on désigne par le terme « film » tout corps solide souple dont le rapport épaisseur/longueur ou largeur est très faible.. Ainsi, un film peut être un sac, un opercule, une feuille, etc., généralement en matière plastique.

Les films de matière plastique au sein de la collecte sélective sont des facteurs limitant l'efficacité du processus de tri et de valorisation des déchets et on a donc recherché à les retirer du flux de déchets, le plus en amont possible du processus de tri, pour améliorer l'efficacité générale du centre de tri et ce d'une façon à limiter la consommation énergétique.

Une solution, proposée dans le brevet européen EP 1 970 130 B1, qui est considéré comme l'état de la technique le plus proche et décrit un dispositif selon le préamble de la revendication 1, consiste à disposer, en aval d'un convoyeur d'alimentation, un tambour sur lequel sont montés des crochets escamotables dans ce dernier et qui est porté à rotation par d'un châssis, des moyens étant prévus pour commander la sortie et la rentrée des crochets pour que, dans une zone de saisie des films, les crochets soient étendus hors du tambour pour accrocher des films, et pour que, dans une zone de dégagement des films, les crochets soient rentrés dans le tambour.

Les crochets sont montés sur le tambour par l'intermédiaire d'éléments à double levier qui sont montés pivotants par rapport au tambour et portent chacun un suiveur de came positionné pour venir en contact avec une came. La came est fixée au châssis, axialement à l'extérieur du tambour, et se présente sous la forme d'un profilé dont une première extrémité marque le début de la zone de dégagement et dont l'autre, seconde, extrémité marque le début de la zone de saisie.

À partir de la première extrémité de la came la distance radiale à l'axe du tambour diminue dans le sens de rotation du tambour, de telle sorte que, lorsque les crochets arrivent dans la zone de dégagement, les suiveurs de came entrent en contact avec la came et sont poussés radialement vers l'intérieur à mesure qu'ils se déplacent le long de la came, amenant les éléments à double levier à pivoter par rapport au tambour et faire ainsi rentrer les crochets dans le tambour.

Lorsque les crochets approchent la seconde extrémité de la came, les suiveurs de came atteignent une section de la came dont la distance radiale à l'axe du tambour augmente dans le sens de rotation du tambour, de telle sorte que les suiveurs de came sont autorisés à s'écarter de l'axe du tambour sous l'action de ressorts qui sollicitent en permanence les éléments à double levier, et donc les crochets, vers la position sortie.

Ainsi, les moyens de commande de la rentrée des crochets sont formés par la came et les moyens de commande de la sortie des crochets sont formés par les ressorts.

Ce sont ces mêmes ressorts qui maintiennent les crochets hors du tambour dans la zone de saisie.

Selon cette solution, le tambour est associé à des moyens permettant de séparer, par soufflage d'air, les films des autres déchets entre la chute de la masse de déchets en bout du convoyeur, d'alimentation et sa réception sur un autre convoyeur, un bac de collecte, etc.

A cet effet, le tambour est positionné vis-à-vis du convoyeur d'alimentation pour ménager un espace suffisant entre les extrémités libres des crochets en position sortie et la trajectoire de chute suivie par les déchets autres que les films, de telle sorte que les crochets ne s'engagent pas dans la masse de déchets.

Les moyens de séparation des films vis-à-vis des autres déchets sont formés par un système de soufflage d'air comprenant des première et seconde buses d'air. La première buse d'air est disposée au-dessous du convoyeur d'alimentation et pour que la trajectoire de chute des déchets passe entre la première buse d'air et le tambour, et est orientée pour souffler de l'air en direction du tambour, tandis que la seconde buse d'air est disposée au-dessus de la zone de saisie et orientée pour souffler de l'air vers les crochets.

L'écoulement d'air produit par la première buse permet de séparer les films des autres déchets, en entraînant les films vers la zone de saisie où ils sont saisis par les crochets qui sont alors en position sortie, et l'écoulement d'air produit par la seconde buse, qui est opposé au déplacement des crochets dans la zone de saisie, permet de dégager les déchets auxquels les crochets ne se sont pas correctement accrochés, à savoir idéalement les déchets autres que les films en matière plastique, avant que les films accrochés aux crochets ne soient récupérés pour recyclage.

La solution selon EP 1 970 130 B1 fait ainsi appel à des moyens aérauliques, lesquels ont comme inconvénients de conduire à une consommation d'énergie très importante et de nécessiter une installation pneumatique.

Par ailleurs, ce dispositif de séparation est très sensible aux fines particules de déchets, appelées « fines », qui seront entraînées par l'écoulement d'air produit par la première buse et viendront encrasser le tambour. Cela impose de prévoir en amont du dispositif de séparation un dispositif de définage visant à retirer les fines du flux de déchets, ce qui augmente les coûts.

Egalement, ce dispositif de séparation ne permet pas de séparer des autres déchets les films dits « alourdis », qui sont des films qui se sont enveloppés au moins partiellement sur d'autres déchets solides non souples ou des films dans lesquels sont piégés des déchets solides non souples.

Un autre inconvénient de ce dispositif de séparation est qu'il sera aisément rendu inopérant en cas de déchets aberrants dans le flux de déchets, tels que des corps métalliques durs. En effet, les dents seront tordues par de tels déchets aberrants et ne pourront plus être ramenées dans leur position rentrée, obligeant à un arrêt du dispositif de séparation et de l'ensemble de la chaîne de tri dans laquelle il est implanté.

Par conséquent, bien que le dispositif de séparation selon EP 1 970 130 B1 permette dans une certaine mesure une bonne séparation des films à partir d'une masse de déchets en mélange, il existe un besoin pour un dispositif présentant une plus grande efficacité de séparation, qui soit plus robuste, dont l'installation est moins complexe et dont la fabrication et le fonctionnement sont moins coûteux.

La présente vise à satisfaire ce besoin et a pour objet un dispositif de séparation de films à partir d'une masse de déchets selon la revendication 1.

Le dégagement des films vis-à-vis des dents est obtenu, au moins en partie, par la rentrée des dents.

On entend par « moyens rigides d'appui » des moyens qui résistent, sans se déformer sensiblement, aux efforts de torsion, de cisaillement, de compression, etc., qui lui seront appliqués lorsque les dents seront engagées dans la masse de déchets. Les moyens rigides d'appui sont ainsi définis par opposition à des moyens élastiques d'appui que sont par exemple les ressorts.

Ces moyens rigides d'appui sont solidaires d'une ou plusieurs dents dans la mesure nécessaire à permettre à la ou aux dents de prendre appui, par l'intermédiaire desdits moyens, sur l'au moins un rail. Ainsi, selon les cas, les moyens rigides d'appui peuvent être solidaires en rotation et/ou translation d'une ou plusieurs dents.

L'expression « dans l'enveloppe de l'espace intérieur du dispositif de séparation » signifie que le ou chaque rail se situe à l'intérieur de la partie de plan délimitée par la courbe fermée obtenue par la projection orthogonale de la trajectoire suivie par la surface périphérique sans fin, sur le plan passant par la ligne longitudinale moyenne dudit rail.

On utilise l'expression « surface périphérique sans fin » pour désigner, selon les cas, une surface réelle de la partie mobile, comme par exemple la surface cylindrique extérieure d'un tambour, ou une surface imaginaire qui pourra être définie, par exemple, comme étant la surface tangentielle à l'extérieur de la partie mobile dans le cas où cette dernière est formée, par exemple, par une succession d'éléments dont les faces extérieures ne forment pas ensemble une unique surface réelle continue.

Le maintien des dents en position sortie par appui des moyens rigides d'appui sur au moins un rail comme défini ci-dessus autorise l'application sur les dents de forces plus importantes sans pour autant que les dents ne soient ramenées en position rentrée. Le dispositif de séparation selon la présente invention peut donc être placé vis-à-vis du convoyeur d'alimentation dans une position telle que les dents, dans la zone de saisie, s'engagent dans la masse de déchets pour saisir les films et les séparer de la masse de déchets.

La présente invention permet donc de réduire les coûts et la consommation d'énergie en fonctionnement, du fait qu'elle ne fait pas intervenir de moyens aérauliques pour séparer les films des autres déchets, et d'obtenir une séparation plus efficace du fait que les dents viennent s'engager dans la masse de déchets.

La présente invention présente également l'avantage d'offrir une plus grande souplesse dans le choix de la position du dispositif de séparation par rapport au convoyeur d'alimentation. En effet, le dispositif de séparation selon EP 1 970 130 B1 doit impérativement être disposé en sortie d'un convoyeur d'alimentation à partir duquel la masse de déchets chute. En revanche, en plus de pouvoir être placé de manière analogue au dispositif de séparation selon EP 1 970 130 B1, quoique beaucoup plus proche de la trajectoire des déchets lors de leur chute, le dispositif de séparation selon la présente invention peut également être disposé à la verticale au-dessus du convoyeur d'alimentation de façon à venir saisir, à l'aide des dents les films dans la masse de déchets transportés par le convoyeur d'alimentation. Cette souplesse de choix de positionnement du dispositif de séparation est particulièrement avantageux en ce qu'il permet l'équipement d'installations déjà existantes et dont l'implantation n'est pas modifiable ou à un coût prohibitif.

Le dispositif de séparation selon la présente invention peut se présenter sous la forme d'un tambour. Dans ce cas, le tambour constitue la partie mobile du dispositif de séparation et la surface périphérique sans fin est formée par la surface cylindrique extérieure du tambour.

Avantageusement, le dispositif de séparation selon la présente invention se présente sous la forme d'un convoyeur ayant au moins deux axes de changement de direction de déplacement de la partie mobile.

Le choix du nombre d'axes de changement de direction pourra se faire en fonction de l'implantation de l'installation. Le dispositif de séparation selon la présente invention se présentera avantageusement sous la forme d'un convoyeur à deux axes de changement de direction de déplacement de la partie mobile.

La partie mobile peut être formée par une pluralité de palettes dont les faces extérieures forment la surface périphérique sans fin et dans au moins certains desquelles sont ménagées des fentes formant les ouvertures à travers lesquelles les dents sont destinées à passer.

Une bande souple est avantageusement appliquée contre les faces extérieures des palettes de façon à recouvrir les espaces libres entre deux palettes successives, des ouvertures étant prévues dans la bande souple pour le passage des dents.

On souligne ici que le ou chaque rail peut définir un trajet d'appui rectiligne, par exemple dans le cas d'un dispositif de séparation en formé de convoyeur, ou en arc de cercle, par exemple dans le cas d'un dispositif de séparation en forme de tambour, ou de manière plus générale un trajet courbe.

La présente invention n'est également pas limitée à la mise en oeuvre du ou des rails. Ainsi, un rail peut consister en un profilé classique, en un moyeu rotatif dont la surface périphérique extérieure définit ledit trajet d'appui, etc.

De préférence, les dents sont fixées de manière amovible à la partie mobile, de façon à permettre à l'utilisateur de choisir une dent de forme spécifique approprié aux déchets qui seront triés dans l'installation dans laquelle le dispositif de séparation est destiné à être implanté.

Selon un mode de réalisation particulier, les dents peuvent être montées de façon à être aptes à être animées d'un mouvement de translation vis-à-vis de la surface périphérique sans fin, de préférence perpendiculairement à cette dernière.

Par exemple, les dents peuvent consister chacune en un doigt rectiligne dont une première extrémité est destinée à s'engager dans la masse de déchets et dont la seconde extrémité se situe dans l'espace intérieur du dispositif de séparation. Chaque doigt est guidé en translation par la partie mobile ou un élément de guidage porté par la partie mobile, dans l'espace intérieur, et un ressort est monté sur chaque doigt, entre la seconde extrémité et la partie mobile, de façon à solliciter de manière élastique le doigt vers la position rentrée. Un rail vient pousser le doigt vers l'extérieur, en comprimant le ressort, et maintient le doigt en position sortie par appui de la seconde extrémité sur le rail. Dans ce mode de réalisation, les moyens rigides d'appui sont formées par les doigts eux-mêmes, en particulier leur seconde extrémité.

Avantageusement, les dents sont montées pivotantes par rapport à la surface périphérique sans fin, de façon à passer de la position sortie à la position rentrée par un mouvement de pivotement dans la direction opposée à la direction de déplacement de la partie mobile, et inversement pour passer de la position rentrée à la position sortie. Le montage pivotant des dents est une solution moins complexe, moins coûteuse et moins sensible aux chocs que le mode de réalisation de type doigt rectiligne décrit ci-dessus.

De préférence, l'axe de pivotement de chaque dent est en aval, dans le sens de déplacement de la partie mobile, de l'extrémité libre de la dent, ce qui permet d'obtenir une plus grande amplitude de mouvement de l'extrémité libre de la dent pour un même angle de pivotement, et donc un plus fort effet de dégagement des films qui s'y seraient accrochés.

De préférence, les dents comprennent chacune un bord avant, qui est destiné à faire face à la direction de mouvement de la masse de déchets dans la zone de saisie, et un bord arrière opposé au bord avant, l'un quelconque du bord avant et du bord arrière suivant un arc d'un cercle dont le centre coïncide avec le point de pivotement de la dent, ou appartient à l'axe de pivotement de la dent, ce qui permet de garantir une étanchéité optimale au niveau de l'ouverture correspondante et d'avoir une meilleure maîtrise du jeu.

Selon d'un mode de réalisation particulier, les moyens rigides d'appui peuvent comprendre des leviers solidaires en rotation d'une ou plusieurs dents et dont une extrémité est agencée pour être en contact avec un rail.

Dans ce mode de réalisation particulier, les moyens pour commander la sortie des dents peuvent être formés par des premiers moyeux coaxiaux et dont l'axe coïncide avec l'un des axes de changement de direction de déplacement de la partie mobile, chaque premier moyeu ayant une surface périphérique circulaire dans le prolongement de laquelle s'étend un rail et dont le diamètre est tel que, dans au moins la région qui précède ledit rail, la distance radiale entre la surface périphérique circulaire et la surface périphérique sans fin est égale ou sensiblement égale à la distance entre ledit rail et ladite surface périphérique sans fin.

Peut être prévu, à proximité de l'extrémité des rails opposée aux premiers moyeux, un axe de changement de direction de déplacement de la partie mobile, et peuvent être disposés des seconds moyeux coaxiaux et dont l'axe coïncide avec ledit axe, chaque second moyeu ayant une surface périphérique circulaire dans le prolongement d'un rail et dont le diamètre est tel que, dans au moins la région qui suit ledit rail, la distance radiale entre la surface périphérique circulaire et la surface périphérique sans fin est égale ou sensiblement égale à la distance entre ledit rail et ladite surface périphérique sans fin.

Selon un mode de réalisation particulier, sont prévus deux rails, un le long de chaque bord de la surface périphérique sans fin, dans la zone de saisie, et les moyens rigides d'appui peuvent comprendre en outre des arbres chacun solidaires en rotation d'une ou plusieurs dents, solidaires en translation de la surface périphérique sans fin et portés rotatif autour de leur axe par la partie mobile, le cas échéant par une palette respective, chaque arbre étant solidaire en rotation d'au moins un levier.

Chaque arbre peut comporter plusieurs platines de fixation de dents, sur lesquelles les dents sont fixées de manière amovible. Ainsi, il est possible de définir le pas entre les dents solidaires d'un même arbre en fonction de l'installation dans laquelle le dispositif de séparation est à installer.

Les dents peuvent être réparties régulièrement ou non le long de la surface périphérique sans fin, et être par exemple réparties en rangées, en quinconce, en chevrons, etc.

Les dents sont avantageusement réparties le long de la surface périphérique sans fin en colonnes. On entend par colonne une ligne s'étendant parallèlement à la direction de déplacement de la partie mobile. Ainsi, les dents peuvent être disposées en rangées, en quinconce, en chevrons, etc., tout en pouvant être considérées comme étant réparties en colonne.

Peut être prévu, pour chaque colonne de dents, un rail, le cas échéant un premier moyeu et un second moyeu respectivement avant et après un rail, dans le sens de déplacement de la partie mobile, et les leviers peuvent être formés par une partie de la dent conformée pour prendre appui sur le rail correspondant, le cas échéant également les premier et second moyeux correspondants.

Les moyens pour commander la rentrée des dents sont des moyens de sollicitation élastiques des dents vers la position rentrée, tels que des ressorts.

L'utilisation de tels moyens permet de renforcer encore la souplesse du dispositif de séparation selon la présente invention, du fait qu'il peut continuer à fonctionner même si un déchet aberrant est venu tordre certaines dents. Dans un tel cas, les dents tordues pourront ne pas être ramenées en position rentrée par lesdits moyens et restées ainsi toujours en position sortie.

Sont avantageusement prévus, dans la zone de dégagement, des moyens de décollement aptes à décoller les films qui auraient adhérer à la surface périphérique sans fin, les moyens de décollement étant notamment des moyens de raclage de la surface périphérique sans fin, tels qu'un peigne, une brosse, un racleur, etc. En variante, les moyens de décollement peuvent être des moyens agencés pour souffler de l'air sur la surface périphérique sans fin dans une direction permettant un décollement des films.

La présente invention a également pour objet une installation de tri de films à partir d'une masse de déchets, comprenant un convoyeur d'alimentation apte à transporter une masse de déchets dans une direction et une ossature portant un dispositif de séparation des films à partir d'une masse de déchets, caractérisé par le fait que. le dispositif de séparation est tel que défini ci-dessus et dont le positionnement par rapport au convoyeur d'alimentation est réglable.

De préférence, le dispositif de séparation est monté réglable en inclinaison et en translation par rapport au convoyeur d'alimentation, ce qui permet d'ajuster le trajet suivi par les dents dans la zone de saisie au flux de la masse de déchets, pour un tri optimal.

Le dispositif de séparation selon la présente invention, lorsqu'il se présente sous la forme d'un convoyeur, peut par exemple être orienté par rapport au convoyeur d'alimentation à 0°, à savoir avec le côté long du convoyeur correspondant à la zone de saisie parallèle à la direction d'avance du convoyeur d'alimentation, à 90°, à savoir avec ledit côté long perpendiculaire à ladite direction d'avance, ou à un quelconque autre angle, pourvu que les dents s'engagent dans la masse de déchets en mouvement.

Comme indiqué précédemment, en plus de pouvoir être incliné de manière ajustable, le dispositif de séparation peut être placé en bout du convoyeur d'alimentation, pour saisir les films alors que la masse de déchets tombe, ou être placé à la verticale du convoyeur d'alimentation.

Il est donc possible d'ajuster à la fois la position et l'inclinaison du dispositif de séparation en fonction des contraintes du processus de tri, pour obtenir une efficacité maximale du dispositif.

Pour mieux illustrer l'objet de la présente invention, on va en décrire ci-après, à titre indicatif et non limitatif, un mode de réalisation particulier avec référence aux dessins annexés.

Sur ces dessins :
- la Figure 1 est un schéma de principe de fonctionnement du dispositif de séparation selon la présente invention, placé en bout d'un convoyeur d'alimentation déversant une masse de déchets, illustrant une phase de saisie de films par les dents ;
- la Figure 2 est un schéma analogue à celui de la Figure 1, mais illustrant une phase de dégagement des films vis-à-vis des dents ;
- la Figure 3 est un schéma de principe de fonctionnement du dispositif de séparation selon la présente invention, selon une autre implantation ;
- les Figures 4 et 5 sont des vues en perspective, respectivement de devant et de derrière, d'un dispositif de séparation selon le mode de réalisation particulier de la présente invention ;
- les Figures 6 et 7 sont des vues en perspective de dessous d'une palette à dents, les dents étant respectivement en position rentrée et en position sortie ;
- la Figure 8 est une vue de côté du dispositif de séparation, certaines pièces ayant été omises de façon à exposer l'espace intérieur du dispositif de séparation ;
- la Figure 9 est une vue en perspective du dispositif de séparation, certaines pièces ayant été omises de façon à exposer l'espace intérieur du dispositif de séparation ; et
- la Figure 10 est une vue du dispositif de séparation implanté en sortie d'un convoyeur d'alimentation.

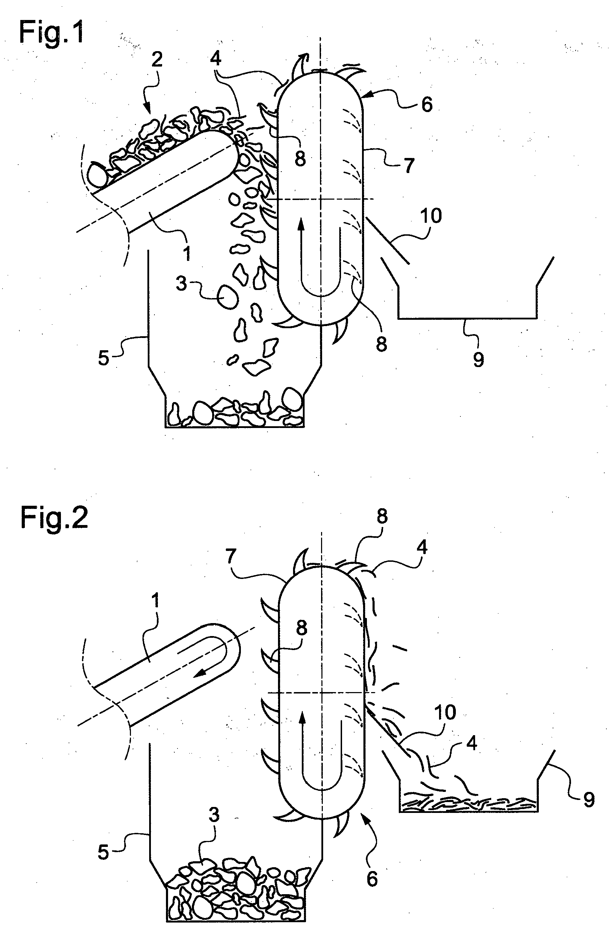

Si l'on se réfère aux Figures 1 et 2, on peut voir que l'on y a représenté des schémas illustrant le principe de fonctionnement du dispositif de séparation selon la présente invention.

Un convoyeur d'alimentation 1 transporte une masse de déchets 2, comprenant des déchets divers 3 et des films 4 qu'il s'agit de séparer des déchets divers 3, jusqu'à la déverser, au niveau de l'extrémité de chute du convoyeur d'alimentation 1, pour qu'elle chute dans un bac 5.

Un dispositif de séparation 6 selon la présente invention est placé en face de ladite extrémité de chute et se présente sous la forme d'un convoyeur dont la partie mobile, dont la surface est représentée schématiquement en 7, suit un trajet de circulation fermé. Le dispositif de séparation 6 comporte des dents escamotables 8 déplaçables, à travers des ouvertures prévues à cet effet dans la surface 7, entre une position sortie, dans laquelle elles font saillie de la surface 7, et une position rentrée, dans laquelle elles sont escamotées sous la surface 7. Les dents 6 se déplacent conjointement avec la surface 7 le long du trajet de circulation fermé.

Dans l'exemple représenté, le dispositif de séparation 6 est placé à la verticale, à savoir que les longueurs du convoyeur sont verticales, et à une distance du convoyeur d'alimentation 1 telle que la masse de déchets 2 vient en contact avec la surface 7 côté convoyeur d'alimentation 1 après qu'elle chute du convoyeur d'alimentation 1, la zone dans laquelle la masse de déchets 2 est en contact avec la surface 7 formant la zone dite de saisie des films.

Dans cette zone de saisie, les dents 8 sont en position sortie, et maintenue dans cette position, de façon à venir s'engager dans la masse de déchets 2, la direction de déplacement des dents 8 étant opposée à la direction de chute de la masse de déchets 2. A cet effet, les dents 8 sont conformées pour retenir les films 4 à l'intérieur de la masse de déchets 8, et non les déchets divers 3 qui sont collectés dans le bac 5, et sont ainsi, comme par exemple dans l'illustration des Figures 1 et 2, recourbées pour s'achever en une extrémité libre pointue sur laquelle les films 4 peuvent s'accrocher plus aisément, comme on peut le voir sur les dents 8 en partie haute de la zone de saisie sur la Figure 1.

On a représenté sur la Figure 2 la phase de dégagement des films 4 qui ont été saisis par les dents 8 dans la zone de saisie. Dans un souci de clarté, il n'a pas été représenté la masse de déchets 2 qui continue à être déversée par le convoyeur d'alimentation 4 et dont les films 4 sont saisis par les dents 8 qui se trouvent maintenant côté convoyeur d'alimentation 1.

Dans la zone dite de dégagement, qui dans l'exemple représenté correspond au côté de la surface 7 opposé au convoyeur d'alimentation 1, les dents 8 sont ramenées en position rentrée, les films 4 sont empêchés de rentrer par les ouvertures à travers lesquelles les dents 8 passent et chutent alors pour être récupérés dans un bac 9.

On prévoit avantageusement une tôle déflectrice 10 inclinée au-dessus du bac 5 de façon à guider vers le bac 5 les films 4 dans leur chute et à éventuellement détacher de la surface 7 les films 4 qui seraient restés au contact de celle-ci après la rentrée des dents 8.

On constate donc que le dispositif de séparation 6 permet de séparer les films 4 à partir d'une masse de déchets 2 en mouvement et de récupérer les films 4 pour un traitement ultérieur.

Bien entendu, bien que l'on ait représenté sur les Figures 1 et 2 des bacs 5 et 9 pour récupérer les déchets divers 3 et les films 4, on peut prévoir à la place d'autres convoyeurs en vue d'acheminer les déchets triés par exemple vers des postes de tri manuel pour des opérations de tri supplémentaires.

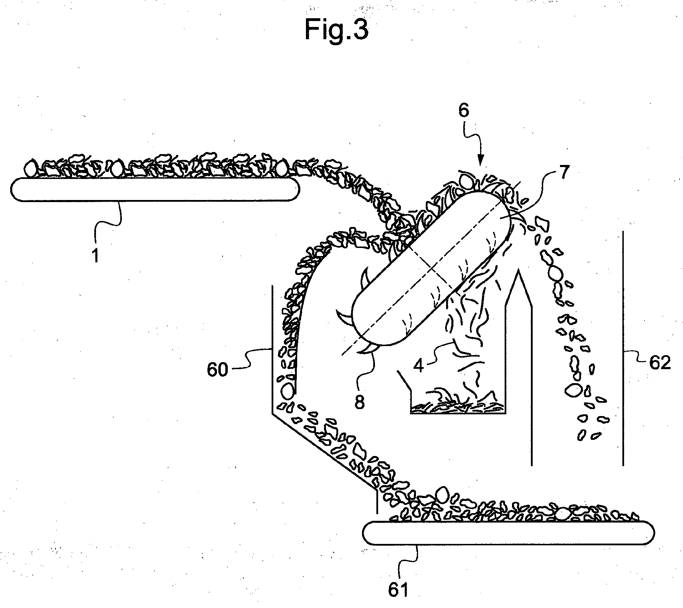

Si l'on se réfère en outre à la Figure 3, on peut voir que l'implantation du dispositif de séparation 6 n'est pas limitée à l'exemple représenté sur les Figures 1 et 2.

Le dispositif de séparation 6 est disposé en sortie du convoyeur d'alimentation 1 (par exemple horizontal comme illustré) pour que la masse de déchets 2 soit déversée sur le dispositif de séparation 6, ce dernier étant incliné pour que sa partie supérieure soit plus éloignée de l'extrémité de chute du convoyeur d'alimentation 1 que sa partie inférieure.

Les objets lourds et/ou ayant une capacité à rebondir ne seront pas saisis par les dents 8 et tomberont donc sur la gauche du dispositif de séparation 6 lorsque l'on regarde la Figure 3, dans une première sortie où ils pourront être dirigés par un moyen de déviation 60 vers un convoyeur de sortie 61.

Les autres objets plus légers, sans être des films 4, seront acheminés par les dents 8 jusqu'à la partie supérieure du dispositif de séparation 6 où, par l'effet de la vitesse de la partie mobile 7 et de leur balistique, ils seront dirigés vers l'extérieur dans une deuxième sortie où ils seront guidés par un moyen de guidage 62 vers le convoyeur de sortie 61. On obtient ainsi un flux de déchets sans film sur le convoyeur de sortie 61.

Les films 4, qui sont saisis par les dents 8, seront séparés de ces dernières lors de leur rentrée et seront évacués par une troisième sortie vers un bac dédié (non représenté).

Dans cette implantation, le dispositif de séparation 6 sera avantageusement réglable angulairement par rapport au convoyeur d'alimentation 1.

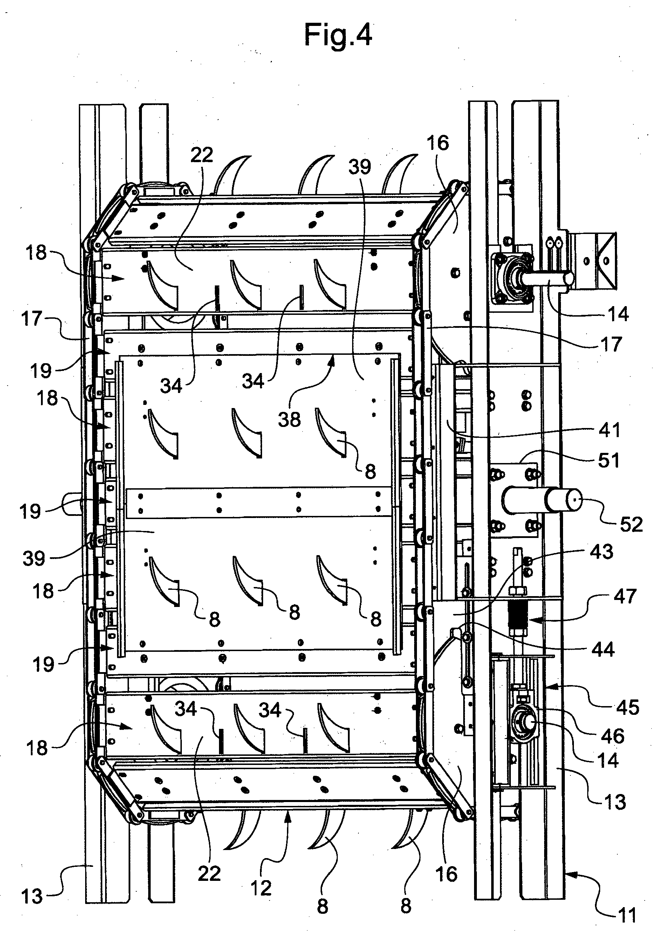

On va maintenant décrire un mode de réalisation particulier du dispositif de séparation 6 avec référence aux Figures 4 à 10.

Le dispositif de séparation 6 se présente sous la forme générale d'un convoyeur et comprend un châssis 11, une partie mobile 12 présentant la surface périphérique sans fin 7, les dents 8, des moyens pour faire circuler la partie mobile 12, des moyens pour commander la sortie et la rentrée des dents 8 et des moyens pour maintenir les dents 8 en position sortie dans la zone de saisie.

Le châssis 11 comprend deux flancs 13 ayant chacun la forme générale d'un profilé en U et disposés en regard l'un de l'autre. Des traverses s'étendent entre les deux flancs 13.

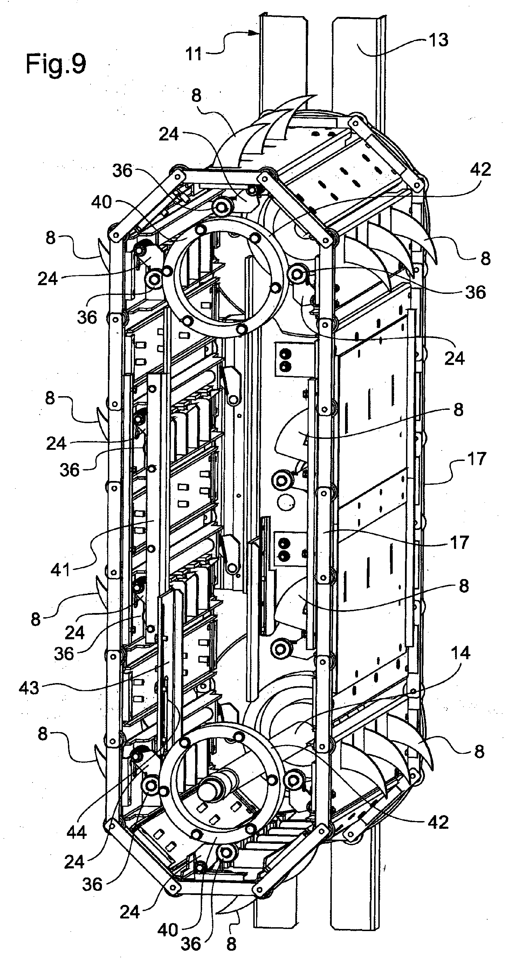

Un premier et un second axe de roue 14 s'étendent entre les flancs 13 respectivement dans une première et une seconde région d'extrémité des flancs 13, en étant portés à rotation par les flancs 13. L'axe de roue 14 côté haut, dit axe de roue 14 moteur, est entraîné en rotation par un motoréducteur 15 (Figure 9).

Sur chaque axe de roue 14 sont montée, côté intérieur du châssis 11, deux roues à chaîne 16, une à proximité de chaque flanc 13. Les deux roues à chaîne 16 situées à proximité du même flanc 13 sont reliés par une chaîne 17 permettant de transmettre le mouvement de rotation des roues à chaîne 16 montées sur l'axe de roue 14 moteur aux deux autres roues à chaîne 16.

Chaque chaîne 17 est rendue solidaire de la partie mobile 12 pour que le déplacement des chaînes 17 entraîne le déplacement de la partie mobile 12 le long du trajet de circulation fermé représenté schématiquement sur les Figures 1 et 2.

La partie mobile 12 est formée par plusieurs palettes à dents 18 et palettes intermédiaires 19, placées de manière alternée les unes à la suite des autres et s'étendant chacune entre les deux chaînes 17, de façon à obtenir un dispositif de séparation 6 ayant la forme générale d'un convoyeur de type à bande, la surface périphérique sans fin 7 étant formée globalement par les faces extérieures des palettes 18 et 19.

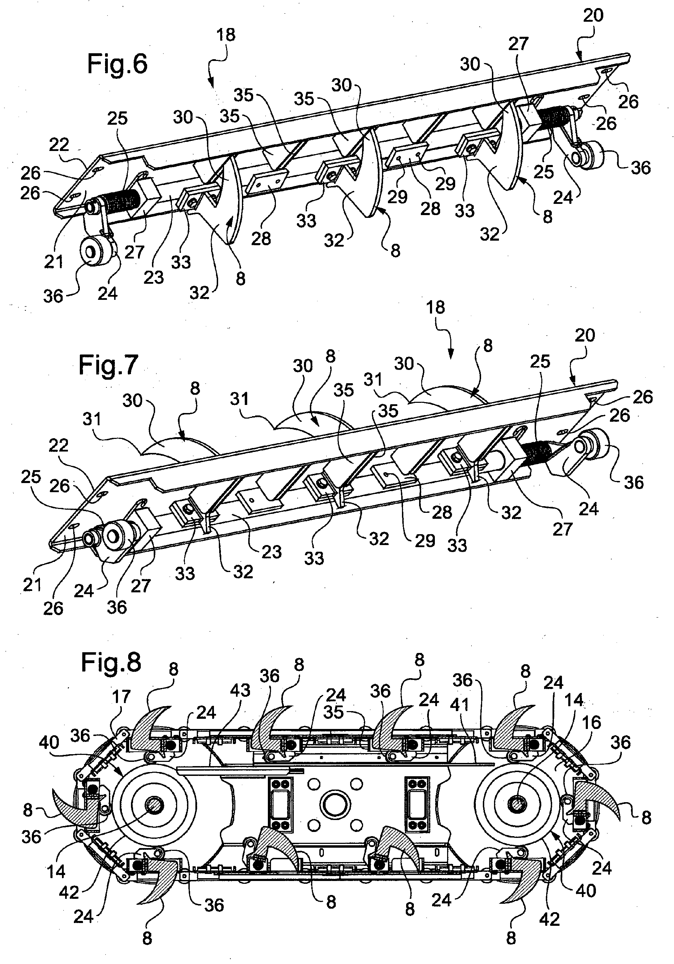

Si l'on se réfère plus particulièrement aux Figures 6 et 7, on peut voir qu'une palette à dents 18 comprend une plaque 20 allongée ayant une face intérieure 21 et une face extérieure 22, un arbre 23, les dents 8 solidaires de l'arbre 23, un levier 24 à chaque extrémité de l'arbre 23 et un ressort de torsion 25 associé à chaque levier 24.

Chaque palette à dents 18 est rendue solidaire des chaînes 17 par vissage de la plaque 20 sur une patte solidaire d'un maillon de chacune des deux chaînes 17 et ayant un retour venant se placer sous la plaque 20. A cet effet, des trous traversants 26 sont pratiqués à chaque extrémité de la plaque 20 et des trous traversants analogues sont pratiqués dans ledit retour de chacune des deux pattes, de telle sorte que les trous traversants sont alignés les uns avec les autres pour autoriser le vissage.

L'arbre 23 est porté à rotation par la plaque 20 par des paliers 27 solidaires de la face intérieure 21. L'axe longitudinal de l'arbre 23 est parallèle à la direction longitudinale de la plaque 20 et l'arbre 23 s'étend sur pratiquement toute la longueur de la plaque 20. Ainsi, l'axe longitudinal des arbres 23 est parallèle à la surface 7 et perpendiculairement à la direction de déplacement de cette dernière. Par ailleurs, des petites platines de support 28 sont fixées sur l'arbre 23 et régulièrement espacées le long de celui-ci, pour la solidarisation des dents 8 à l'arbre 23 par vissage dans deux trous traversants 29 prévus dans chaque platine de support 28.

Les dents 8 sont chacune formées par un corps plat ayant une partie active 30 effilée et arquée, s'achevant en une extrémité libre pointue 31, et une partie de fixation 32 s'étendant perpendiculairement à la région de base large de la partie active 30. Une contre-platine 33 est portée par l'extrémité de chaque partie de fixation 32 côté opposé à la partie active 30, pour vissage de la contre-platine 33 contre une platine de support 28, deux trous traversants étant prévus à cet effet dans la contre-platine 33.

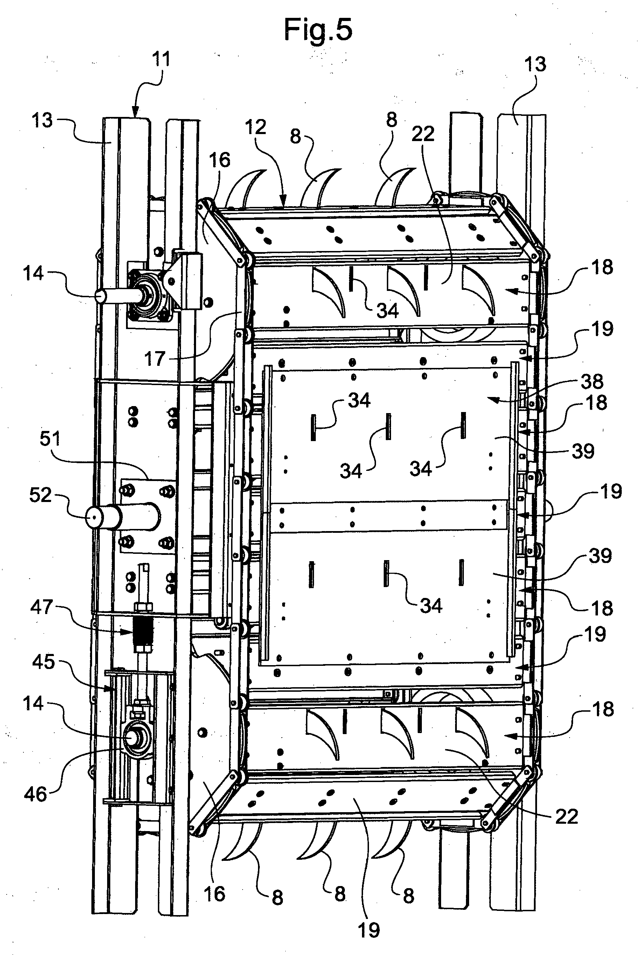

Les platines de support 28 sont disposées chacune par rapport à une fente 34 respective pratiquée dans la plaque 20, que l'on peut mieux voir sur les Figures 4 et 5 par exemple. A partir de chacun des deux bords de chaque fente 34 s'étend une plaque de guidage 35 côté face intérieure 21, les deux plaques de guidage 35 étant parallèles et espacées l'une de l'autre d'une distance égale à la largeur de la fente 34.

Comme on peut le voir sur la Figure 6, la largeur des fentes 34 est choisie pour être légèrement supérieure à la largeur des dents 8 pour permettre le passage des dents 8 à travers les fentes 34, et également pour être suffisamment proche de la largeur des dents 8 pour ne laisser qu'un très faible interstice entre les plaques de guidage 35 et les dents 8 afin d'éviter l'entrée de déchets dans l'espace intérieur du dispositif de séparation 6.

Les dents 8 sont déplacées entre la position sortie et la position rentrée par action des leviers 24 et. des ressorts de torsion 25.

Chaque levier 24 est solidaire, à une première extrémité, de l'arbre 23 et porte, à l'autre extrémité, un galet 36. A chaque levier 24 est associé un ressort de torsion 25 dont une extrémité est solidaire de la plaque 20 et dont l'autre extrémité est solidaire du levier 24, à distance de l'axe longitudinal de l'arbre 23. Les ressorts de torsion 25 sont agencés pour solliciter en permanence les leviers 24 dans la position rentrée des dents 8, illustrée sur la Figure 6, dans laquelle les dents 8 ne dépassent pas de la face extérieure 22 de la plaque 20. Les ressorts de torsion 25 sont dans leur état comprimé lorsque les dents 8 sont en position sortie, illustrée sur la Figure 7, dans laquelle la partie active 32 des dents 8 fait saillie de la face extérieure 22.

L'arbre 23, les dents 8 et les leviers 24 sont solidaires en translation et en rotation entre eux, et sont solidaires en translation avec la plaque 20, de sorte que le mouvement des chaînes 17 déplace d'un seul bloc les palettes à dents 18.

Chaque palette intermédiaire 19 comprend une plaque allongée de forme analogue à celle de la plaque 20 et a une face intérieure et une face extérieure 37. Les palettes intermédiaires 19 sont rendues solidaires des chaînes 17 de la même manière que les palettes à dents 18.

Si l'on se réfère à nouveau aux Figures 4 et 5, on peut voir que les palettes 18, 19 forment un tablier contre l'extérieur duquel est appliquée une bande souple 38 en morceaux, dont seule une partie est représentée, afin d'assurer l'étanchéité aux fines. La bande souple 38 est formée par une succession de morceaux de bande souple 39 reliée mécaniquement entre eux et sur les palettes 18, 19, par exemple par vissage, de façon à recouvrir entièrement le tablier.

On va maintenant décrire, avec référence aux Figures 8 et 9, la manière dont les dents 8 sont amenées à passer de la position rentrée à la position sortie et inversement.

Sur ces Figures, on peut voir que sont placés dans l'espace intérieur délimité par la partie mobile 12, à proximité de chaque flanc 13, deux moyeux 40 et un rail 41.

Chaque moyeu 40 est porté sur la face intérieure d'une roue 16 et est entraîné en rotation avec cette dernière. Chaque moyeu 40 présente une surface périphérique extérieure circulaire 42 sur laquelle peut venir rouler un galet 36.

Le rail 41 est formé par une tôle en L s'étendant entre les deux moyeux 40, à proximité des faces intérieures des palettes 18 et 19 et parallèlement à celles-ci, sur le côté long correspondant à la zone de saisie lorsque le dispositif de séparation 6 est en position d'utilisation.

L'extrémité supérieure du rail 41 est à proximité étroite du point de la surface 42 du moyeu 40 correspondant qui est le plus proche de la partie mobile 42.

L'autre extrémité du rail 41 est fixée à une plaque 43 dans laquelle est pratiquée une fente 44 longitudinale débouchant sur son bord inférieure, fente 44 dans laquelle est placée une partie de la roue à chaîne 16 respective. La plaque 43 est fixée à un support de palier tendeur 45 supportant un palier tendeur 46 et son mécanisme de mise en tension 47, agencés pour permette l'installation et la mise en tension des chaînes 17. Une fois les chaînes 17 mises sous tension, chaque rail 41 est fixé au flanc 13 correspondant par vissage de l'une des branches de la tôle L contre l'intérieur du flanc 13.

De chaque côté du dispositif de séparation 6, les moyeux 40, le rail 41 et la plaque 43 sont positionnés de telle sorte que lorsqu'un galet 36 est en contact avec ceux-ci, les dents 8 solidaires de l'arbre 23 auquel est relié le galet 36 sont en position sortie.

Par ailleurs, le diamètre des moyeux 40 est choisi pour que la distance radiale séparant la surface extérieure 42 et la surface périphérique sans fin 7 soit sensiblement égale à la distance séparant le rail 41 et ladite surface 7.

Ainsi, les surfaces extérieures 42 des moyeux 40, le rail 41 et la plaque 43 forment ensemble un chemin de roulement sensiblement continu sur lequel les galets 36 roulent et prennent appui lorsque les dents 8 sont en position sortie, en s'opposant à l'action des ressorts 25.

En fonctionnement, lorsqu'une dent 8, en position rentrée et maintenue dans cette position sous l'action des ressorts 25, arrive en région basse du dispositif de séparation 6, les galets 36 correspondants viennent en contact avec la surface extérieure 42 des moyeux 40, ce qui a pour effet de pousser les galets 36 radialement vers l'extérieur et ainsi de faire pivoter vers l'extérieur les leviers correspondants 24, faisant tourner l'arbre 23 et sortir les dents 8 desquelles il est solidaire.

Ainsi, les moyeux 40 en région basse, les leviers 24 et l'arbre 23 forment les moyens de commande de la sortie des dents 8.

A mesure que la dent 8 poursuit son déplacement, les galets 36 continuent de rouler sur les surfaces extérieures 42, qui elles-mêmes tournent, puis viennent rouler sur les plaques 43 sur lesquelles ils continuent de prendre appui, puis viennent rouler sur les rails 41 où là encore ils prennent appui.

Ainsi, les plaques 43 et les rails 41 forment des moyens de maintien de la dent 8 en position sortie et l'arbre 23 et les leviers 24, étant tous rigides, forment des moyens rigides d'appui permettant aux dents 8 d'être maintenues en position sortie bien qu'elles soient engagées d'une masse de déchets en mouvement dans la direction opposée à la direction de déplacement des dents 8.

Lorsque les galets 36 arrivent à l'extrémité supérieure des rails 41, ils passent sur la surface extérieure 42 des moyeux 40 en partie haute, la distance très faible entre les rails 41 et la surface extérieure 42 ne permettant pas aux ressorts 25 de ramener les dents 8 dans la position rentrée.

Les galets 36 continuent de rouler sur la surface extérieure 42 du moyeu 40 en partie haute, jusqu'à arriver au point où la surface extérieure 42 s'écarte de la partie mobile 12. A cet instant, plus rien ne s'oppose à l'action des ressorts 25 qui sollicitent en permanence les leviers 24 pour les faire tourner dans le sens ramenant les dents 8 en position rentrée, et les dents 8 sont ainsi rentrées par les ressorts 25, libérant les films qui se sont accrochés aux dents 8.

Le dispositif de séparation 6 est avantageusement implanté de façon mobile en rotation et en translation par rapport au convoyeur d'alimentation 1.

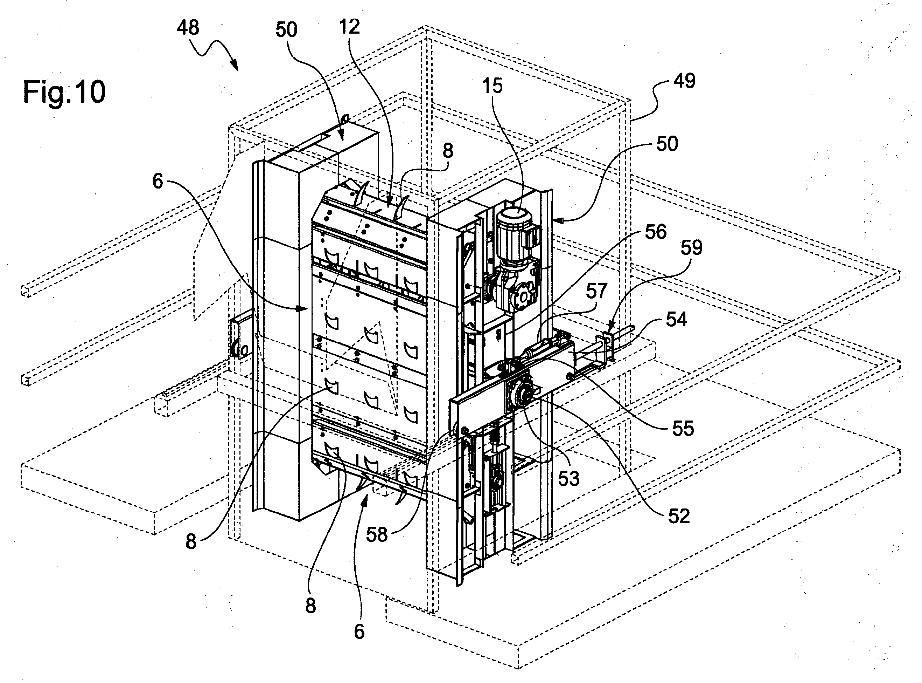

Si l'on se réfère maintenant à la Figure 10, sur laquelle on a représenté une cellule de tri de films 48 placée en sortie d'un convoyeur d'alimentation 1, on peut voir qu'une ossature 49 supporte le dispositif de séparation 6, dont chaque flanc 13 est monté dans un carter 50, de manière à permettre un mouvement de translation horizontale et un mouvement de rotation. Dans un souci de clarté du dessin, l'ossature 49 a été représentée en pointillé.

A cet effet, une platine de châssis 51, que l'on peut mieux voir sur' les Figures 4 et 5, est fixée sur chaque flanc 13, globalement au centre dans la direction longitudinale des flancs 13, et un axe 52 s'étend vers l'extérieur à partir de chaque platine de châssis 51.

Chaque axe 52 est monté à rotation dans un palier 53 installé dans un pied de support 54 consistant en une tôle en U dont l'ouverture est tournée vers le bas et dans le fond duquel est pratiquée une fente 55.

Un levier 56 est rendu solidaire de l'axe 52 et s'étend vers le haut, à travers la fente 55, et son extrémité libre est reliée à un actionneur linéaire 57, de type tendeur ou vérin, apte à faire pivoter ledit levier et donc faire tourner l'axe 52 et le dispositif de séparation 6 dans son ensemble autour de l'axe 52.

Par ailleurs, chaque pied de support 54 est muni de roulettes 58 placées entre les deux ailes de la tôle en U et monté sur une barre horizontale faisant partie de l'ossature 49. Chaque pied de support 54 est par ailleurs relié à un dispositif de réglage de profondeur 59 permettant de déplacer le pied de support 54 respectif en translation le long de la barre horizontale correspondante.

Une telle cellule 48 autorise un réglage précis et optimal du dispositif de séparation 6, à la fois en inclinaison et en profondeur, par rapport à la masse de déchets déversée par un convoyeur d'alimentation 1.

Il est bien entendu que le mode de réalisation ci-dessus de la présente invention a été donné à titre indicatif et non limitatif et que des modifications pourront y être apportées sans que l'on s'écarte pour autant du cadre de la présente invention.

## Revendications

1. Dispositif de séparation (6) de films (4) à partir d'une masse de déchets (2) en mouvement dans une direction, comprenant :
- un châssis (11),
- une partie mobile (12) montée sur le châssis (11) et présentant une surface périphérique sans fin (7) délimitant un espace intérieur,
- des dents (8) montées de façon à être déplaçables avec la partie mobile (12), réparties le long de la surface périphérique sans fin (7) et escamotables dans l'espace intérieur par l'intermédiaire d'ouvertures (34) ménagées dans la surface périphérique sans fin (7),
- des moyens (14, 15, 16, 17) pour faire circuler la partie mobile (12), et donc les dents (8), le long d'un trajet de circulation fermé comprenant une zone de saisie de films (4) par les dents (8), dans laquelle, en utilisation, la direction de déplacement des dents (8) est opposée à la direction du mouvement de la masse de déchets (2), et une zone de dégagement des films (4) vis-à-vis des dents (8),
- des moyens pour commander la sortie (24, 40) et la rentrée (25) des dents (8) pour que, dans la zone de saisie, les dents (8) soient en position sortie, dans laquelle elles font saillie de la surface périphérique sans fin (7) pour la saisie de films (4), et pour que, dans la zone de dégagement, les dents (8) soient en position rentrée, dans laquelle elles sont escamotées dans l'espace intérieur, et
- des moyens (24, 41) pour maintenir les dents (8) en position sortie dans la zone de saisie, comprenant, d'une part, des moyens rigides d'appui (24) qui sont chacun solidaires d'une ou plusieurs dents (8), et, d'autre part, au moins un rail (41) définissant un trajet d'appui dont la position est fixe par rapport au trajet de circulation fermé suivie par la partie mobile (12), le ou les rails (41) étant reliés au châssis (11) **caractérisé en ce que** le ou les rails est/sont dans l'espace intérieur du dispositif de séparation (6) et positionné(s) de telle sorte que, lorsque la ou les dents (8) solidaires d'un moyen rigide d'appui (24) sont dans la zone de saisie, ledit moyen rigide d'appui (24) est en contact avec au moins un rail (41) et empêche ainsi la ou les dents (8) d'être amenées à la position rentrée.

2. Dispositif de séparation (6) selon la revendication 1, **caractérisé par le fait qu'**il se présente sous la forme d'un convoyeur (6) ayant au moins deux axes de changement de direction de déplacement de la partie mobile (12).

3. Dispositif de séparation (6) selon la revendication 2, **caractérisé par le fait que** la partie mobile (12) est formée par une pluralité de palettes (18, 19) dont les faces extérieures (22, 37) forment la surface périphérique sans fin (7) et dans au moins certaines desquelles sont ménagées des fentes (34) formant les ouvertures à travers lesquelles les dents (8) sont destinées à passer.

4. Dispositif de séparation (6) selon la revendication 3, **caractérisé par le fait qu'**une bande souple (38) est appliquée contre les faces extérieures (22, 37) des palettes (18, 19) de façon à recouvrir les espaces libres entre deux palettes successives (18, 19), des ouvertures étant prévues dans la bande souple (38) pour le passage des dents (8).

5. Dispositif de séparation (6) selon l'une des revendications 1 à 4, **caractérisé par le fait que** les dents (8) sont montées pivotantes par rapport à la surface périphérique sans fin (7), de façon à passer de la position sortie à la position rentrée par un mouvement de pivotement dans la direction opposée à la direction de déplacement de la partie mobile (12), et inversement pour passer de la position rentrée à la position sortie.

6. Dispositif de séparation (6) selon la revendication 5, **caractérisé par le fait que** l'axe de pivotement de chaque dent (8) est en aval, dans le sens de déplacement de la partie mobile (12), de l'extrémité libre (31) de la dent (8).

7. Dispositif de séparation (6) selon la revendication 6, **caractérisé par le fait que** les dents (8) comprennent chacune un bord avant, qui est destiné à faire face à la direction de mouvement de la masse de déchets (2) dans la zone de saisie, et un bord arrière opposé au bord avant, l'un quelconque du bord avant et du bord arrière suivant un arc d'un cercle dont le centre coïncide avec le point de pivotement de la dent (8).

8. Dispositif de séparation (6) selon l'une des revendications 1 à 7, **caractérisé par le fait que** les moyens rigides d'appui (24) comprennent des leviers (24) solidaires en rotation d'une ou plusieurs dents (8) et dont une extrémité est agencée pour être en contact avec un rail (41).

9. Dispositif de séparation (6) selon la revendication 8, prise en dépendance de la revendication 2, **caractérisé par le fait que** les moyens pour commander la sortie des dents sont formés par des premiers moyeux (40) coaxiaux et dont l'axe coïncide avec l'un des axes de changement de direction de déplacement de la partie mobile (12), chaque premier moyeu (40) ayant une surface périphérique circulaire (42) dans le prolongement de laquelle s'étend un rail (41) et dont le diamètre est tel que, dans au moins la région qui précède ledit rail (41), la distance radiale entre la surface périphérique circulaire (42) et la surface périphérique sans fin (7) est égale ou sensiblement égale à la distance entre ledit rail (41) et ladite surface périphérique sans fin (7).

10. Dispositif de séparation (6) selon la revendication 9, **caractérisé par le fait qu'**est prévu, à proximité de l'extrémité des rails (41) opposée aux premiers moyeux (40), un axe de changement de direction de déplacement de la partie mobile (12), et que sont disposés des seconds moyeux (40) coaxiaux et dont l'axe coïncide avec ledit axe, chaque second moyeu (40) ayant une surface périphérique circulaire (42) dans le prolongement d'un rail (41) et dont le diamètre est tel que, dans au moins la région qui suit ledit rail (41), la distance radiale entre la surface périphérique circulaire (42) et la surface périphérique sans fin (7) est égale ou sensiblement égale à la distance entre ledit rail (41) et ladite surface périphérique sans fin (7).

11. Dispositif de séparation (6) selon l'une des revendications 9 et 10, **caractérisé par le fait que** sont prévus deux rails (41), un le long de chaque bord de la surface périphérique sans fin (7), dans la zone de saisie, et que les moyens rigides d'appui (24) comprennent en outre des arbres (23) chacun solidaires en rotation d'une ou plusieurs dents (8), solidaires en translation de la surface périphérique sans fin (7) et portés rotatif autour de leur axe par la partie mobile (12), le cas échéant par une palette respective (18), chaque arbre (23) étant solidaire en rotation d'au moins un levier (24).

12. Dispositif de séparation (6) selon l'une des revendications 1 à 11, **caractérisé par le fait que** les dents (8) sont réparties le long de la surface périphérique sans fin (7) en colonnes.

13. Dispositif de séparation (6) selon la revendication 12, prise en dépendance de l'une des revendications 9 et 10, **caractérisé par le fait qu'**est prévu, pour chaque colonne de dents (8), un rail (41), le cas échéant un premier moyeu (40) et un second moyeu (40) respectivement avant et après un rail (41), dans le sens de déplacement de la partie mobile (12), et **par le fait que** les leviers (24) sont formés par une partie de la dent (8) conformée pour prendre appui sur le rail correspondant (41), le cas échéant également les premier et second moyeux correspondants (40).

14. Installation de tri de films (4) à partir d'une masse de déchets (2), comprenant un convoyeur d'alimentation (1) apte à transporter une masse de déchets (2) dans une direction et une ossature (49) portant un dispositif de séparation (6) des films (4) à partir d'une masse de déchets (2), **caractérisé par le fait que** le dispositif de séparation (6) est tel que défini à l'une des revendications 1 à 13 et dont le positionnement par rapport au convoyeur d'alimentation (1) est réglable, le dispositif de séparation (6) étant notamment monté réglable en inclinaison et en translation par rapport au convoyeur d'alimentation (1).

## Patentansprüche

1. Vorrichtung zur Trennung (6) von Folien (4) aus einer Masse von Abfällen (2), die sich in eine Richtung bewegt, umfassend:
- ein Gestell (11),
- ein bewegliches Teil (12), das an dem Gestell (11) montiert ist und eine endlose Umfangsfläche (7) aufweist, die einen Innenraum begrenzt,
- Zähne (8), die so montiert sind, dass sie mit dem beweglichen Teil (12) mitlaufen, entlang der endlosen Umfangsfläche (7) verteilt und über Öffnungen (34) in den Innenraum einklappbar sind, die in der endlosen Umfangsfläche (7) angeordnet sind,
- Mittel (14, 15, 16, 17), damit das bewegliche Teil (12), und somit die Zähne (8), eine geschlossene Umlaufstrecke entlang umlaufen, die einen Bereich zum Greifen von Folien (4) mit den Zähnen (8), in dem im Gebrauch die Fortbewegungsrichtung der Zähne (8) der Bewegungsrichtung der Masse von Abfällen (2) entgegengesetzt ist, und einen Bereich zum Abgeben der Folien (4) gegenüber den Zähnen (8) umfasst,
- Mittel zum Steuern der Auswärtsbewegung (24, 40) und des Einziehens (25) der Zähne (8), damit sich die Zähne (8) in dem Greifbereich in der ausgeschwenkten Stellung befinden, in der sie aus der endlosen Umfangsfläche (7) ragen, damit Folien (4) gegriffen werden, und damit sich die Zähne (8) in dem Abgabebereich in der eingezogenen Stellung befinden, in der sie in den Innenraum eingeklappt sind, und
- Mittel (24, 41) zum Halten der Zähne (8) in der ausgeschwenkten Stellung in dem Greifbereich, die einerseits starre Auflagemittel (24), die jeweils fest mit einem oder mehreren Zähnen (8) verbunden sind, und andererseits mindestens eine Schiene (41) umfassen, die eine Auflagestrecke festlegt, deren Stellung bezogen auf die geschlossene Umlaufstrecke des beweglichen Teils (12) fest ist, wobei die Schiene oder Schienen (41) mit dem Gestell (11) verbunden ist bzw. sind, **dadurch gekennzeichnet, dass** sich die Schiene oder Schienen im Innenraum der Trennvorrichtung (6) befindet bzw. befinden und so platziert ist bzw. sind, dass wenn sich der Zahn oder die Zähne (8), der bzw. die fest mit einem starren Auflagemittel (24) verbunden ist bzw. sind, in dem Greifbereich befindet bzw. befinden, das starre Auflagemittel (24) mindestens eine Schiene (41) berührt und so verhindert, dass der Zahn oder die Zähne (8) in die eingezogene Stellung gebracht wird bzw. werden.

2. Trennvorrichtung (6) nach Anspruch 1, **dadurch gekennzeichnet, dass** sie in Form einer Fördervorrichtung (6) vorliegt, die mindestens zwei Achsen zur Änderung der Fortbewegungsrichtung des beweglichen Teils (12) aufweist.

3. Trennvorrichtung (6) nach Anspruch 2, **dadurch gekennzeichnet, dass** das bewegliche Teil (12) von mehreren Tafeln (18, 19) gebildet ist, deren Außenflächen (22, 37) die endlose Umfangsfläche (7) bilden und wobei in zumindest einigen davon Schlitze (34) vorgesehen sind, die die Öffnungen bilden, durch die hindurch die Zähne (8) gelangen sollen.

4. Trennvorrichtung (6) nach Anspruch 3, **dadurch gekennzeichnet, dass** eine flexible Bahn (38) an den Außenflächen (22, 37) der Tafeln (18, 19) befestigt ist, damit die Freiräume zwischen zwei aufeinanderfolgenden Tafeln (18, 19) abgedeckt sind, wobei Öffnungen in der flexiblen Bahn (38) zum Hindurchbewegen der Zähne (8) vorgesehen sind.

5. Trennvorrichtung (6) nach einem der Ansprüche 1 bis 4, **dadurch gekennzeichnet, dass** die Zähne (8) bezogen auf die endlose Umfangsfläche (7) schwenkbar montiert sind, damit sie durch eine Schwenkbewegung in die Richtung entgegengesetzt zur Fortbewegungsrichtung des beweglichen Teils (12) aus der ausgeschwenkten Stellung in die eingezogene Stellung gelangen, und umgekehrt, damit sie aus der eingezogenen Stellung in die ausgeschwenkte Stellung gelangen.

6. Trennvorrichtung (6) nach Anspruch 5, **dadurch gekennzeichnet, dass** die Schwenkachse jedes Zahns (8) in der Fortbewegungsrichtung des beweglichen Teils (12) hinter dem freien Ende (31) des Zahns (8) liegt.

7. Trennvorrichtung (6) nach Anspruch 6, **dadurch gekennzeichnet, dass** die Zähne (8) jeweils eine Vorderkante, die der Bewegungsrichtung der Masse von Abfällen (2) im Greifbereich gegenüberliegen soll, und eine Hinterkante gegenüber der Vorderkante umfassen, wobei sich beliebig die Vorderkante oder die Hinterkante auf einem Kreisbogen bewegt, dessen Mittelpunkt mit dem Drehpunkt des Zahns (8) übereinstimmt.

8. Trennvorrichtung (6) nach einem der Ansprüche 1 bis 7, **dadurch gekennzeichnet, dass** die starren Auflagemittel (24) Hebel (24) umfassen, die drehfest mit einem oder mehreren Zähnen (8) verbunden sind und von denen ein Ende so angeordnet ist, dass es eine Schiene (41) berührt.

9. Trennvorrichtung (6) nach Anspruch 8, in Abhängigkeit von Anspruch 2, **dadurch gekennzeichnet, dass** die Mittel zum Steuern der Auswärtsbewegung der Zähne von ersten koaxialen Naben (40) gebildet sind und deren Achse mit einer der Achsen zur Änderung der Fortbewegungsrichtung des beweglichen Teils (12) übereinstimmt, wobei jede erste Nabe (40) eine kreisförmige Umfangsfläche (42) aufweist, in deren Verlängerung eine Schiene (41) verläuft, und deren Durchmesser derart ist, dass in mindestens dem Bereich, der vor der Schiene (41) liegt, der radiale Abstand zwischen der kreisförmigen Umfangsfläche (42) und der endlosen Umfangsfläche (7) dem Abstand zwischen der Schiene (41) und der endlosen Umfangsfläche (7) entspricht oder im Wesentlichen entspricht.

10. Trennvorrichtung (6) nach Anspruch 9, **dadurch gekennzeichnet, dass** in der Nähe des Endes der Schienen (41) gegenüber den ersten Naben (40) eine Achse zur Änderung der Fortbewegungsrichtung des beweglichen Teils (12) vorgesehen ist, und dass zweite koaxiale Naben (40) angeordnet sind, deren Achse mit der Achse übereinstimmt, wobei jede zweite Nabe (40) eine kreisförmige Umfangsfläche (42) in der Verlängerung einer Schiene (41) aufweist und deren Durchmesser derart ist, dass in mindestens dem Bereich, der auf die Schiene (41) folgt, der radiale Abstand zwischen der kreisförmigen Umfangsfläche (42) und der endlosen Umfangsfläche (7) dem Abstand zwischen der Schiene (41) und der endlosen Umfangsfläche (7) entspricht oder im Wesentlichen entspricht.

11. Trennvorrichtung (6) nach Anspruch 9 oder 10, **dadurch gekennzeichnet, dass** im Greifbereich zwei Schienen (41), eine entlang jedem Rand der endlosen Umfangsfläche (7), vorgesehen sind, und dass die starren Auflagemittel (24) ferner Wellen (23) umfassen, die jeweils drehfest mit einem oder mehreren Zähnen (8) verbunden sind, die translationsfest mit der endlosen Umfangsfläche (7) verbunden sind und von dem beweglichen Teil (12), gegebenenfalls von einer jeweiligen Tafel (18), um ihre Achse drehbar getragen werden, wobei jede Welle (23) drehfest mit mindestens einem Hebel (24) verbunden ist.

12. Trennvorrichtung (6) nach einem der Ansprüche 1 bis 11, **dadurch gekennzeichnet, dass** die Zähne (8) entlang der endlosen Umfangsfläche (7) in Spalten verteilt sind.

13. Trennvorrichtung (6) nach Anspruch 12, in Abhängigkeit von Anspruch 9 oder 10, **dadurch gekennzeichnet, dass** für jede Spalte von Zähnen (8) eine Schiene (41), gegebenenfalls eine erste Nabe (40) und eine zweite Nabe (40) vor beziehungsweise nach einer Schiene (41), in der Fortbewegungsrichtung des beweglichen Teils (12) vorgesehen ist, und dadurch, dass die Hebel (24) von einem Abschnitt des Zahns (8) gebildet sind, der so ausgebildet ist, dass er auf der entsprechenden Schiene (41), gegebenenfalls auch der ersten und zweiten entsprechenden Nabe (40), aufliegt.

14. Anlage zum Sortieren von Folien (4) aus einer Masse von Abfällen (2), die eine Aufgabefördervorrichtung (1) umfasst, die in der Lage ist, eine Masse von Abfällen (2) in eine Richtung zu transportieren, und eine Tragkonstruktion (49), die eine Vorrichtung zum Trennen (6) der Folien (4) aus einer Masse von Abfällen (2) trägt, **dadurch gekennzeichnet, dass** die Trennvorrichtung (6) nach einem der Ansprüche 1 bis 13 definiert ist und deren Platzierung bezogen auf die Aufgabefördervorrichtung (1) einstellbar ist, wobei die Trennvorrichtung (6) insbesondere so montiert ist, dass sie bezogen auf die Aufgabefördervorrichtung (1) in der Neigung und translatorisch einstellbar ist.

## Claims

1. Device (6) for separating films (4) from a mass of waste (2) moving in one direction, comprising:
- a frame (11),
- a moving part (12) mounted on the frame (11) and having an endless peripheral surface (7) delimiting an inner space,
- teeth (8) mounted so as to be movable with the moving part (12), distributed along the endless peripheral surface (7) and retractable in the inner space via openings (34) provided in the endless peripheral surface (7),
- means (14, 15, 16, 17) for circulating the moving part (12), and thus the teeth (8), along a closed circulation path comprising an area of engagement of the films (4) by the teeth (8), in which, in use, the direction of movement of the teeth (8) is opposed to the direction of movement of the mass of waste (2), and an area of disengagement of the films (4) with respect to the teeth (8),
- means for controlling the exit (24, 40) and the re-entry (25) of the teeth (8) such that, in the engagement area, the teeth (8) are in the exited position, in which they protrude from the endless peripheral surface (7) for the engagement of films (4), and such that, in the disengagement area, the teeth (8) are in the re-entered position, in which they are retracted in the inner space, and
- means (24, 41) for maintaining the teeth (8) in the exited position in the engagement area, comprising, on one hand, support rigid means (24) each of which are integral with one or more teeth (8) and, on the other hand, at least one track (41) defining a support path the position of which is fixed with respect to the closed circulation path followed by the moving part (12), the one or more tracks (41) being connected to the frame (11), **characterized in that** the one or more tracks is/are in the inner space of the separation device (6) and positioned such that, when the one or more teeth (8) integral with a support rigid means (24) are in the engagement area, said support rigid means (24) is in contact with at least one track (41) and thus prevents the one or more teeth (8) from being brought in the re-entered position.

2. Separation device (6) according to claim 1, **characterized in that** it is shaped as a conveyor (6) having at least two axes of change of the direction of movement of the moving part (12).

3. Separation device (6) according to claim 2, **characterized in that** the moving part (12) is formed by a plurality of blades (18, 19) the outer faces (22, 37) of which form the endless peripheral surface (7), and in some of which are provided slots (34) forming the openings through which the teeth (8) are intended to pass.

4. Separation device (6) according to claim 3, **characterized in that** a flexible belt (38) is applied against the outer faces (22, 37) of the blades (18, 19) so as to cover the free spaces between two successive blades (18, 19), openings being provided in the flexible belt (38) for the passage of the teeth (8).

5. Separation device (6) according to one of claims 1 to 4, **characterized in that** the teeth (8) are pivotally mounted with respect to the endless peripheral surface (7), so as to switch from the exited position to the re-entered position by a pivoting movement in the direction opposed to the direction of movement of the moving part (12), and conversely for switching from the re-entered position to the exited position.

6. Separation device (6) according to claim 5, **characterized in that** the pivot axis of each tooth (8) is downstream, in the direction of movement of the moving part (12), of the free end (31) of the tooth (8).

7. Separation device (6) according to claim 6, **characterized in that** the teeth (8) each have a front edge, intended to face the direction of movement of the mass of waste (2) in the engagement area, and a rear edge opposed to the front edge, any one of the front edge and the rear edge following a circular arc the center of which coincides with the pivot point of the tooth (8).

8. Separation device (6) according to one of claims 1 to 7, **characterized in that** the support rigid means (24) comprise levers (24) secured in a rotationally fixed manner with one or more teeth (8), and an end of which is arranged to be in contact with a track (41).

9. Separation device (6) according to claim 8, when depending on claim 2, **characterized in that** the means for controlling the exit of the teeth are formed by first hubs (40) that are coaxial and the axis of which coincides with one of the axes of change of the direction of movement of the moving part (12), each first hub (40) having a circular peripheral surface (42) in the extension of which a track (41) extends, and the diameter of which is such that, in at least the region preceding said track (41), the radial distance between the circular peripheral surface (42) and the endless peripheral surface (7) is equal or substantially equal to the distance between said track (41) and said endless peripheral surface (7).

10. Separation device (6) according to claim 9, **characterized in that** there is, near the end of the tracks (41) opposed to the first hubs (40), an axis of change of the direction of movement of the moving part (12), and **in that** are provided second hubs (40) that are coaxial and the axis of which coincides with said axis, each second hub (40) having a circular peripheral surface (42) in the extension of a track (41), and the diameter of which is such that, in at least the region following said track (41), the radial distance between the circular peripheral surface (42) and the endless peripheral surface (7) is equal or substantially equal to the distance between said track (41) and said endless peripheral surface (7).

11. Separation device (6) according to one of claims 9 and 10, **characterized in that** two tracks (41) are provided, one along each edge of the endless peripheral surface (7) in the engagement area, and the support rigid means (24) further comprise shafts (23) each secured in a rotationally fixed manner with one or more teeth (8), secured in a translationally fixed manner with the endless peripheral surface (7) and carried rotatably around their axis by the moving part (12), when appropriate by a respective blade (18), each shaft (23) being secured in a rotationally fixed manner with at least one lever (24).

12. Separation device (6) according to one of claims 1 to 11, **characterized in that** the teeth (8) are distributed along the endless peripheral surface (7) into columns.

13. The separation device (6) according to claim 12, when depending on one of claims 9 and 10, **characterized in that**, for each column of teeth (8), is provided a track (41), when appropriate a first hub (40) and a second hub (40) respectively before and after a track (41), in the direction of movement of the moving part (12), and **in that** the levers (24) are formed by a portion of the tooth (8) shaped to seat on the corresponding track (41), when appropriate also on the corresponding first and second hubs (40).

14. Facility for sorting films (4) from a mass of waste (2), comprising a feeding conveyor (1) able to convey a mass of waste (2) in one direction and a frame (49) carrying a device (6) for separating the films (4) from a mass of waste (2), **characterized in that** the separation device (6) is as defined in one of claims 1 to 13 and the position of which with respect to the feeding conveyor (1) is adjustable, the separation device (6) being for example mounted so as to be adjustable in inclination and translation with respect to the feeding conveyor (1).
